# EUROPÄISCHE PATENTSCHRIFT

(11) **EP 1 709 858 B1**
(45) Veröffentlichungstag und Bekanntmachung des Hinweises auf die Patenterteilung: **06.01.2010**
(21) Anmeldenummer: 06111625.7
(22) Anmeldetag: 23.03.2006
(51) Int. Cl.: A01D 41/14

(54) **Erntevorsatz für landwirtschaftliche Erntemaschinen**
Harvester head for agricultural machines
Tête de récolte pour machines agricoles

(30) Priorität: 09.04.2005 DE 102005016350
(43) Veröffentlichungstag der Anmeldung: 11.10.2006
(73) Patentinhaber: Maschinenfabrik Kemper GmbH & Co. KG, 48703 Stadtlohn (DE)
(72) Erfinder: Rickert, Clemens, 48703, Stadtlohn (DE); Hüning, Martin, 48727, Billerbeck (DE); Schulze-Hockenbeck, Leo, 48351, Everswinkel (DE); Weitenberg, Klemens, 46325, Borken (DE)
(74) Vertreter: Holst, Sönke

(56) Entgegenhaltungen:
- EP-A- 1 159 863
- DE-A1- 10 142 978
- FR-A- 2 781 118
- US-A- 3 683 601

## Beschreibung

Die Erfindung betrifft einen Erntevorsatz zur Anbringung an einer selbst fahrenden Erntemaschine, mit einem pendelnd an einem Einzugskanal der Erntemaschine anbringbaren Mittelteil und Seitenteilen, die gegenüber dem Mittelteil durch Verstellmittel zwischen einer Betriebsstellung, in der sie jeweils an einer Seite des Mittelteils angeordnet sind, und einer angehobenen Transportstellung bewegbar sind, und mit Verriegelungsmitteln zum Unterbinden einer Pendelbewegung des Erntevorsatzes gegenüber dem Einzugskanal während eines Transports, wobei die Verriegelungsmittel derart mit den Verstellmitteln gekoppelt sind, dass die Verriegelungsmittel in eine den Erntevorsatz am Einzugskanal arretierende Stellung gebracht sind, wenn die Verstellmittel die Seitenteile in die Transportstellung verbracht haben.

### Stand der Technik

Die DE 100 36 029 A beschreibt eine landwirtschaftliche Mähmaschine mit mehreren seitlich nebeneinander angeordneten Mäheinheiten. Ein Trägerfahrzeug trägt einen sich quer zur Fahrtrichtung erstreckenden Träger, an dem eine erste Mäheinheit befestigt ist. Eine zweite, äußere Mäheinheit ist schwenkbar am Träger befestigt. Die Mäheinheiten werden in eine Außerbetriebsstellung verbracht, indem der Träger durch einen ersten Hydraulikzylinder um eine in Fahrtrichtung weisende Achse gegenüber der Erntemaschine nach oben verschwenkt wird und die erste Mäheinheit mitführt, während gleichzeitig durch einen zweiten Hydraulikzylinder die zweite Mäheinheit um eine ebenfalls in Fahrtrichtung weisende Achse nach innen verschwenkt wird. Die Mäheinheiten können während des Mähbetriebs frei um die erwähnten Achsen pendeln. Während des Transports werden die Mäheinheiten durch die Hydraulikzylinder in ihrer Lage fixiert.

In der DE 35 39 064 A wird eine selbst fahrende Erntemaschine mit einem am Schrägförderer pendelnd aufgehängten Erntevorsatz beschrieben. Um während einer Transportfahrt unerwünschte Bewegungen des Erntevorsatzes um die Pendelachse zu vermeiden, ist ein Hydraulikzylinder vorgesehen, der eingerichtet ist, den Erntevorsatz gegen einen Anschlag zu ziehen. Hier ist zur Arretierung des Erntevorsatzes ein separater Hydraulikzylinder vorgesehen, so dass ein relativ hoher Aufwand getrieben wird.

Es sind auch pendelnd an einer Erntemaschine angebrachte Erntevorsätze bekannt, die zum Transport auf einer Straße manuell mit dem Einzugskanal der Erntemaschine zu verbinden sind, indem Riegelelemente oder dgl. angebracht werden. Als nachteilig ist dabei anzusehen, dass der Fahrer aus der Kabine der Erntemaschine heruntersteigen muss, um die Verriegelung anzubringen. Es besteht auch die Gefahr, dass das Verriegeln für die Straßenfahrt vergessen wird.

Die als gattungsbildend angesehene EP 1 159 863 A beschreibt einen pendelnd an einer selbst fahrenden Erntemaschine angebrachten Erntevorsatz, dessen Seitenteile durch hydraulisch mit der Erntemaschine verbundene Zylinder zwischen einer horizontalen Betriebs- und einer nach oben verschwenkten Transportposition beweglich sind. Die erwähnten Zylinder bewegen mechanisch weitere Geberzylinder, die hydraulisch mit Nehmerzylindern zum Bewegen anderer Elemente des Erntevorsatzes zwischen der Betriebs- und Transportposition dienen. Einer der Nehmerzylinder arretiert den Schwenkrahmen des Erntevorsatzes am mit der Erntemaschinen verbundenen Trägerrahmen, um eine Pendelbewegung des Erntegeräts zu unterbinden.

### Aufgabe der Erfindung

Die der Erfindung zu Grunde liegende Aufgabe wird darin gesehen, einen Erntevorsatz bereitzustellen, der sich auf wenig aufwändige Weise zum Transport gegen eine Pendelbewegung gegenüber der Erntemaschine sichern lässt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Erntevorsatz mit einem Mittelteil, der um eine sich in Vorwärtsrichtung und zumindest näherungsweise horizontal erstreckende Achse pendelnd an einem Einzugskanal einer selbst fahrenden Erntemaschine befestigt ist, beispielsweise an einem Mähdrescher oder einem Feldhäcksler. Die Pendelachse kann eine reale Achse sein, um die der Erntevorsatz pendelt, oder es ist eine imaginäre Achse, um die herum der Erntevorsatz eine Drehbewegung durchführen kann. Der Erntevorsatz umfasst den am Einzugskanal lösbar befestigten Mittelteil und zwei Seitenteile, die in ihrer Betriebsstellung jeweils an einer Seite des Mittelteils angebracht sind. Die Seitenteile sind durch Verstellmittel in eine Transportstellung verbringbar, in der sie gegenüber der Betriebsstellung nach oben hin angehoben sind, insbesondere um 90° in eine vertikale Stellung oder um 180° in eine flach auf dem Mittelteil liegende horizontale Stellung verschwenkt sind. Weiterhin sind Verriegelungsmittel bereitgestellt, um während eines Transports eine Pendelbewegung des Erntevorsatzes gegenüber dem Einzugskanal zu unterbinden. Die Verstellmittel, die zum Verschwenken der Seitenteile zwischen der Betriebsstellung und der Transportstellung vorgesehen sind, dienen auch dazu, die Verriegelungsmittel zu aktivieren. Ein flexibles Zugmittel wird verwendet, beispielsweise ein Seil und/oder eine Kette, das an einem Ende mit einem Seitenteil und am anderen Ende mit einem mit dem Einzugskanal verbundenen Element gekoppelt ist. Die Verbindung zwischen dem Mittelteil und dem Einzugskanal wird dann über den Seitenteil und das Zugmittel bereitgestellt. Ein Vorteil liegt darin, dass die Verstellmittel den Erntevorsatz, wenn erforderlich, selbsttätig um die Pendelachse in eine Mittelstellung verschwenken können.

Die Erfindung kann an beliebigen Typen von Erntevorsätzen verwendet werden. Beispiele sind Maisgebisse mit Mäh- und Einzugseinrichtungen oder mehrteilige Pick-Ups zur Verwendung an selbst fahrenden Feldhäckslern, Maispflücker mit Pflückeinrichtungen zur Verwendung an selbst fahrenden Mähdreschern oder Feldhäckslern, Schneidwerke für die Getreideernte und Sonnenblumenschneidwerke zur Verwendung an selbst fahrenden Mähdreschern oder zur Erzeugung von Ganzpflanzensilage an Feldhäckslern.

### Ausführungsbeispiel

In den Zeichnungen ist ein nachfolgend näher beschriebenes Ausführungsbeispiel der Erfindung dargestellt. Es zeigt:
- Fig. 1: einen Feldhäcksler mit einem Erntevorsatz,
- Fig. 2: eine Draufsicht auf den Erntevorsatz,
- Fig. 3: eine Ansicht des Pendelrahmens und des Tragrahmens des Erntevorsatzes von vorn,
- Fig. 4: eine Vorderansicht des Tragrahmens des Erntevorsatzes in der Transportstellung,
- Fig. 5: eine Vorderansicht des Tragrahmens des Erntevorsatzes in der Betriebsstellung, und
- Fig. 6: eine Vorderansicht des Tragrahmens des Erntevorsatzes in einer aus der Horizontalen heraus gependelten Stellung.

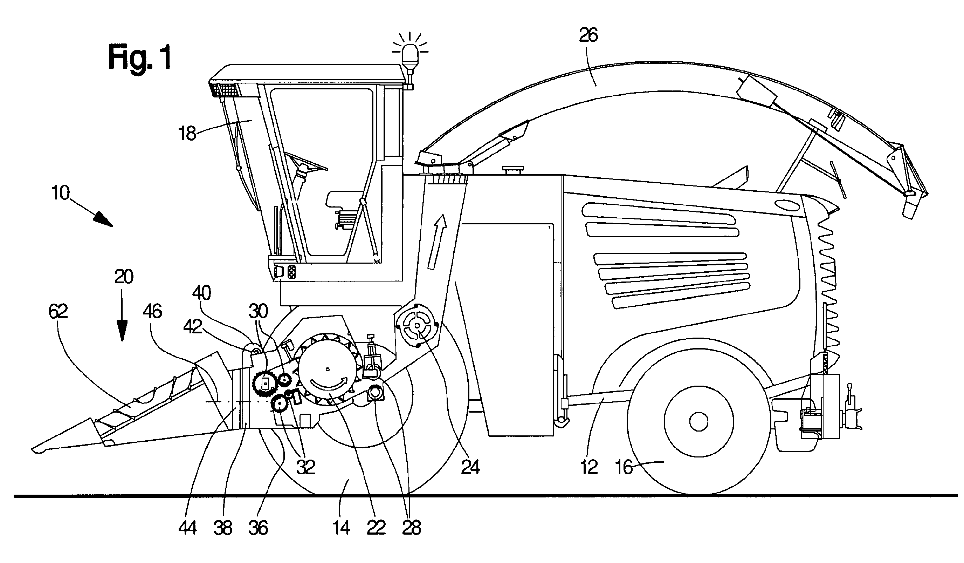

Eine in der Figur 1 gezeigte Erntemaschine 10 in der Art eines selbst fahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über eine in ihrer Position verstellbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

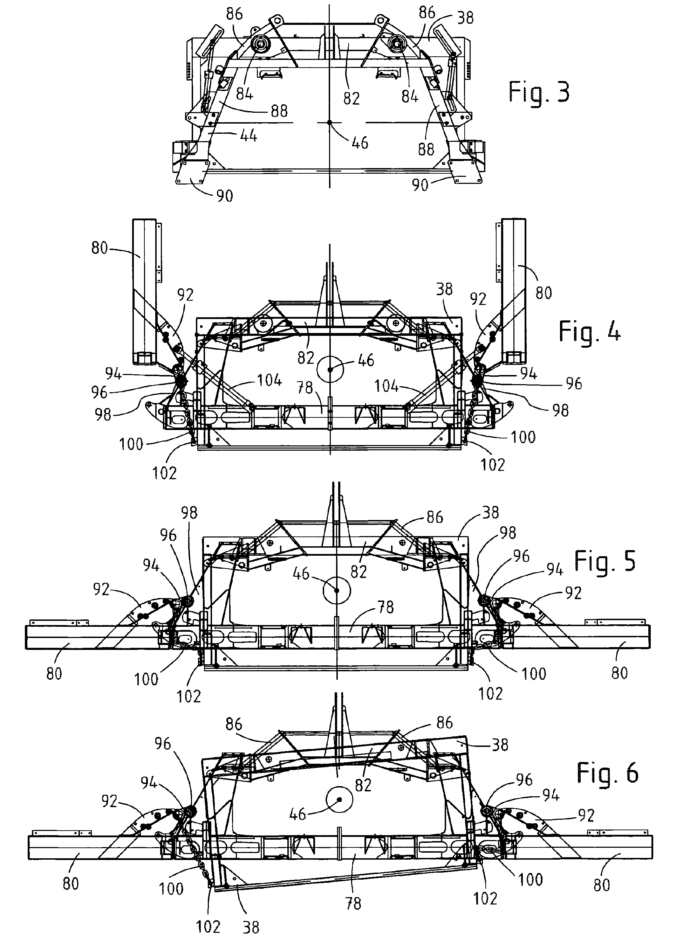

Der Erntevorsatz 20 ist am Einzugskanal 36 der Erntemaschine 10, in dem sich die oberen Vorpresswalzen 30 und unteren Vorpresswalzen 32 befinden, lösbar befestigt. Ein Pendelrahmen 38 weist an seiner Oberseite Haken 40 auf, die an der Oberseite des vorderen Endes des Einzugskanals 36 nach oben überstehende Elemente 42 übergreifen. Zusätzlich kann der Pendelrahmen 38 auch an der Unterseite des Einzugskanals 36 verriegelt sein. Ein Tragrahmen 44, der den eigentlichen Erntevorsatz 20 abstützt, ist gegenüber dem Pendelrahmen 38 um eine virtuelle, sich etwa in Vorwärtsrichtung erstreckende Achse 46 schwenkbar gelagert und erlaubt es dem Erntevorsatz 20, der sich während des Erntebetriebs durch Kufen (nicht eingezeichnet) auf dem Erdboden abstützt, gegenüber dem Einzugskanal 36 um die Achse 46 zu pendeln. Der Aufbau des Pendelrahmens 38 ist in der Figur 3 dargestellt und wird weiter unten erläutert.

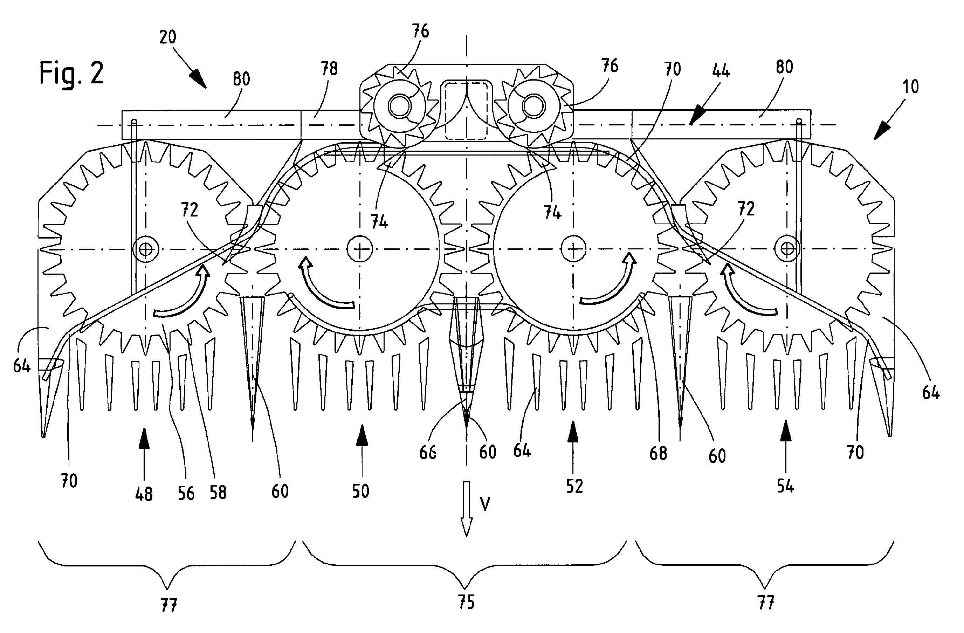

Am Tragrahmen 44 des in der Figur 2 in einer Draufsicht dargestellten Erntevorsatzes 20 sind seitlich nebeneinander vier Mäh- und Einzugseinrichtungen 48, 50, 52, 54 befestigt. Die Mäh- und Einzugseinrichtungen 48 bis 54 setzen sich jeweils aus einer unteren, in Drehung versetzbaren Schneidscheibe und koaxial darüber angeordneten, in Drehung versetzbaren Förderscheiben 56 zusammen. Die Schneidscheiben sind am Rand mit scharfen Zähnen ausgestattet oder anderweitig geschärft, um die Pflanzenstängel von dem im Boden verbleibenden Stumpf abzutrennen. Die Stängel finden in Ausbuchtungen 58 der Förderscheiben 56 Aufnahme und werden wie unten beschrieben zur Erntemaschine 10 transportiert.

Zwischen den Mäh- und Einzugseinrichtungen 48 bis 54 befinden sich jeweils Stängelteiler 60, um die Pflanzen seitlich abzulenken und in den Eingriffsbereich der Mäh- und Einzugseinrichtungen 48 bis 54 zu verbringen, wenn erforderlich. An den beiden äußeren Seiten der Maschine 10 befinden sich antreibbare Stängelheberschnecken 62 (s. Figur 1). An den Vorderseiten der Mäh- und Einzugseinrichtungen 48 bis 54 sind kleinere Stängelteiler 64 angeordnet. An der Vorderseite der inneren, der Längsmittelebene 66 benachbarten Mäh- und Einzugseinrichtungen 50, 52 befindet sich ein Vordruckbügel 68, dessen Aufgabe darin besteht, die Pflanzen nach vorn zu drücken, damit sie von den Mäh- und Einzugseinrichtungen 50, 52 aufgenommen werden können. Ähnliche Vordruckbügel 70 befinden sich auch oberhalb der äußeren Mäh- und Einzugseinrichtungen 48 und 54 und hinter den mittleren Mäh- und Einzugseinrichtungen 50, 52. Die Arbeitsbreite der Mäh- und Einzugseinrichtungen 48 bis 54 entspricht jeweils zwei Reihen, d. h. etwa 1,5 m. Der Erntevorsatz 20 kann somit 8 Reihen Mais gleichzeitig ernten.

Beim Erntebetrieb drehen sich die Mäh- und Einzugseinrichtungen 48 bis 54 in den durch die Pfeile angedeuteten Richtungen. Die der Längsmittelebene 66 benachbarten, inneren Mäh- und Einzugseinrichtungen 50, 52 fördern die Pflanzen somit zunächst nach außen und nach hinten, während die äußeren Mäh- und Einzugseinrichtungen 48, 54 sich zu den ihnen jeweils benachbarten Mäh- und Einzugsrichtungen 50, 52 gegensinnig drehen. Wie anhand der Figur 2 erkennbar ist, übergeben die äußeren Mäh- und Einzugseinrichtungen 48, 54 ihr Erntegut etwa in der Mitte zwischen den Drehachsen der Mäh- und Einzugseinrichtungen 48, 50 bzw. 52, 54 an die inneren Mäh- und Einzugseinrichtungen 50, 52, wozu Ausräumer 72 vorgesehen sind. An der Rückseite der inneren Mäh- und Einzugseinrichtungen 50, 52 wird das Erntegut durch weitere Ausräumer 74 aus den Ausbuchtungen 58 herausgehoben und an Schrägfördertrommeln 76 übergeben, die um leicht nach vorn geneigte Achsen rotieren und den Höhenunterschied zwischen dem Boden des Erntevorsatzes 20 und den nachfolgenden Einzugswalzen 30, 32 des Einzugskanals 36 der Erntemaschine 10 überwinden.

Der Tragrahmen 44 umfasst einen sich horizontal und quer zur Vorwärtsrichtung erstreckenden mittleren Abschnitt 78, der sich am Pendelrahmen 38 abstützt, sowie sich in der Betriebsstellung, wie sie in der Figur 2 dargestellt ist, parallel zum mittleren Abschnitt 78 erstreckende äußere Abschnitte 80, die sich jeweils an den seitlichen Enden des mittleren Abschnitts 78 anschließen. Der mittlere Abschnitt 78 trägt die Schrägfördertrommeln 76 und die mittleren Mäh- und Einzugseinrichtungen 50, 52 und bildet mit ihnen einen Mittelteil 75 des Erntevorsatzes 20. Die äußeren Abschnitte 80 des Tragrahmens 44 tragen jeweils eine der äußeren Mäh- und Einzugseinrichtungen 48 und 54 und bilden mit ihnen je einen Seitenteil 77 des Erntevorsatzes 20. Die äußeren Abschnitte 80 sind gegenüber dem mittleren Abschnitt 78 um sich horizontal und in Vorwärtsrichtung erstreckende Achsen 96 nach oben in eine Transportstellung verschwenkbar, in der sie sich etwa vertikal nach oben erstrecken.

Die Figur 3 zeigt den Pendelrahmen 38 und den daran befestigten Teil des Tragrahmens 44 in einer Frontansicht. Der Pendelrahmen 38 umfasst einen sich horizontal an der Oberseite des Einzugskanals 36 quer zur Vorwärtsrichtung erstreckenden Träger 82, der rückseitig an der Vorderseite des Einzugskanals 36 anliegt. Der Träger 82 haltert zwei um ihre sich in Vorwärtsrichtung erstreckende Achsen drehbare Rollen 84. Auf den Rollen 84 liegen gekrümmte Stangen 86 oder Rohre auf, die mit sich schräg nach unten und außen erstreckenden Streben 88 verbunden sind. Die Streben 88 sind an ihren unteren Enden mit Flanschen 90 verbunden, die wiederum rückseitig am mittleren Abschnitt 78 des Tragrahmens 44 befestigt sind. Es könnten auch weitere Rollen an der Unterseite des Pendelrahmens 38 befestigt sein, an denen Elemente des Tragrahmens 44 befestigt sind und ihn nach oben hin abstützen. Die beschriebene Anordnung ermöglicht es dem Tragrahmen 44, frei um die virtuelle Achse 46 zu pendeln.

Wie anhand der Figur 4 erkennbar ist, in welcher der vollständige Tragrahmen 44 und der Pendelrahmen 38 ebenfalls in einer Frontansicht dargestellt sind, sind an den äußeren Abschnitte 80 des Tragrahmens 44 jeweils Halterungen 92 befestigt, die sich nach oben und innen, in Richtung auf die Längsmittelebene 66 zu, erstrecken. An den Halterungen 92 sind Lagerschenkel 94 starr befestigt. Die Lagerschenkel 94 sind um sich horizontal und in Vorwärtsrichtung erstreckende Achsen 96 gegenüber Halterungen 98 schwenkbar, die ihrerseits mit dem mittleren Abschnitt 78 des Tragrahmens 44 verbunden sind. Als Verstellmittel dienende Hydraulikzylinder 104 erstrecken sich jeweils zwischen den Halterungen 92 und dem mittleren Abschnitt 78 und ermöglichen es, die äußeren Abschnitte 80 zwischen der in den Figuren 2 und 5 gezeigten Betriebsstellung und der in der Figur 4 gezeigten Transportstellung zu verschwenken, in der aufgrund der verringerten Breite des Erntevorsatzes 20 ein problemloses Fahren auf öffentlichen Straßen mit einem an der Vorderseite der Erntemaschine 10 verbleibenden Erntevorsatz 20 möglich ist.

Um eine Pendelbewegung des Erntevorsatzes 20 um die Achse 46 während des Transports zu unterbinden, ist in der Transportstellung jeweils eine Verbindung zwischen den äußeren Abschnitten 80 und dem Pendelrahmen 38 vorgesehen. Diese Verbindung wird durch Ketten 100 realisiert, die an ihren jeweils ersten Enden an den Anbringungsstellen der Lagerschenkel 94 an den Halterungen 92 befestigt und dort mit einem der äußeren Abschnitte 80 verbunden sind. Die jeweils zweiten Enden der Ketten 100 sind an Befestigungsstellen 102 an den unteren Ecken des rechteckförmigen Pendelrahmens 38 befestigt.

Die Ketten 100 sind demnach über den Pendelrahmen 38 starr mit dem Einzugskanal 36 verbunden. Die Anbringungsstellen der Lagerschenkel 94 an den Halterungen 92, an der die Ketten 100 außerdem befestigt sind, sind in der Transportstellung (Figur 4) weiter von den Befestigungsstellen 102 der zweiten Enden der Ketten 100 entfernt als in der Betriebsstellung (Figur 5). Die Ketten 100 sind in ihrer Länge derart bemessen, dass sie in der Transportstellung (Figur 4) gestrafft sind und demnach eine Verbindung zwischen dem (starr am Einzugskanal 36 befestigten) Pendelrahmen 38 und den äußeren Abschnitten 80 realisieren. Da die zum Verschwenken der äußeren Abschnitte 80 gegenüber dem mittleren Abschnitt 78 um die Achsen 96 dienenden Hydraulikzylinder 104 die äußeren Abschnitte 80 gegenüber dem mittleren Abschnitt 78 festhalten, ist eine durchgehende Verbindung hergestellt, die zum Einen ggf. beim Hochschwenken der äußeren Abschnitte 80 durch ein sukzessives Straffen der Ketten 100 der um die Achse 46 nach unten gependelten äußeren Abschnitte 80 bewirkt, dass sich der mittlere Abschnitt 78 parallel zur Unter- und Oberseite des Einzugskanals 36 ausrichtet, und zum Anderen den ganzen Erntevorsatz 20 gegen eine Pendelbewegung um die Achse 46 sichert und arretiert. Werden die seitlichen Abschnitte 80 heruntergeschwenkt, entspannen sich die Ketten 100 und die Arretierung des Erntevorsatzes 20 löst sich selbsttätig.

Die Längen der Ketten 100 sind derart bemessen, dass der Trägerrahmen 44 bei in der Betriebsstellung befindlichen äußeren Abschnitten 80 eine durch die Länge der Ketten 100 begrenzte Pendelbewegung um die Achse 46 durchführen kann, wie in der Figur 6 dargestellt.

## Patentansprüche

1. Erntevorsatz (20) zur Anbringung an einer selbst fahrenden Erntemaschine (10), mit einem pendelnd an einem Einzugskanal (36) der Erntemaschine (10) anbringbaren Mittelteil (75) und Seitenteilen (77), die gegenüber dem Mittelteil (75) durch Verstellmittel zwischen einer Betriebsstellung, in der sie jeweils an einer Seite des Mittelteils (75) angeordnet sind, und einer angehobenen Transportstellung bewegbar sind, und mit Verriegelungsmitteln zum Unterbinden einer Pendelbewegung des Erntevorsatzes (20) gegenüber dem Einzugskanal (36) während eines Transports, wobei die Verriegelungsmittel derart mit den Verstellmitteln gekoppelt sind, dass die Verriegelungsmittel in eine den Erntevorsatz (20) am Einzugskanal (36) arretierende Stellung gebracht sind, wenn die Verstellmittel die Seitenteile (77) in die Transportstellung verbracht haben, **dadurch gekennzeichnet, dass** die Verriegelungsmittel ein flexibles Zugmittel umfassen, das an einem Ende mit einem Seitenteil (77) und am anderen Ende mit einem mit dem Einzugskanal (36) verbundenen Element gekoppelt ist.

2. Erntevorsatz (20) nach Anspruch 1, **dadurch gekennzeichnet, dass** die Verriegelungsmittel als flexibles Zugmittel eine Kette (100) oder ein Seil umfassen.

3. Erntevorsatz (10) nach Anspruch 1 oder 2, **dadurch gekennzeichnet, dass** der Mittelteil (75) und die Seitenteile (77) Mäh- und Einzugseinrichtungen (48, 50, 52, 54) oder Pflückeinrichtungen zur Ernte stängelartiger Pflanzen ausweisen.

## Claims

1. Harvester head (20) for attaching to a self-propelled harvester (10), with a central part (75) which is attachable in an oscillating manner to a gathering duct (36) of the harvester (10), and side parts (77) which are movable in relation to the central part (75) between an operating position, in which they are each arranged on one side of the central part (75), and a raised transport position by means of adjusting means, and with locking means for preventing an oscillating movement of the harvester head (20) in relation to the gathering duct (36) during transportation, wherein the locking means are coupled to the adjusting means in such a manner that the locking means are brought into a position locking the harvester head (20) to the gathering duct (36) when the adjusting means have brought the side parts (77) into the transport position, **characterized in that** the locking means comprise a flexible tensioning means which is coupled at one end to a side part (77) and at the other end to an element which is connected to the gathering duct (36).

2. Harvester head (20) according to Claim 1, **characterized in that** the locking means comprise a chain (100) or a cable as the flexible tensioning means.

3. Harvester head (20) according to Claim 1 or 2, **characterized in that** the central part (75) and the side parts (77) have cutting and gathering devices (48, 50, 52, 54) or plucking devices for harvesting plants with stalks.

## Revendications

1. Tête de récolte (20) pour l'application contre une machine de récolte automotrice (10), comprenant une partie centrale (75) pouvant être appliquée de manière oscillante contre un canal d'amenée (36) de la machine de récolte (10) et des parties latérales (77) qui peuvent être déplacées par rapport à la partie centrale (75) par des moyens de déplacement entre une position fonctionnelle dans laquelle elles sont disposées à chaque fois d'un côté de la partie centrale (75), et une position de transport relevée, et comprenant des moyens de verrouillage pour supprimer un mouvement d'oscillation de la tête de récolte (20) par rapport au canal d'amenée (36) pendant un transport, les moyens de verrouillage étant accouplés aux moyens de déplacement de telle sorte que les moyens de verrouillage soient amenés dans une position de verrouillage de la tête de récolte (20) sur le canal d'amenée (36) lorsque les moyens de déplacement ont amené les parties latérales (77) dans la position de transport, **caractérisée en ce que** les moyens de verrouillage comprennent un moyen de traction flexible qui est accouplé à une extrémité à une partie latérale (77) et à l'autre extrémité à un élément connecté au canal d'amenée (36).

2. Tête de récolte (20) selon la revendication 1, **caractérisée en ce que** les moyens de verrouillage comprennent en tant que moyen de traction flexible une chaîne (100) ou un câble.

3. Tête de récolte (20) selon la revendication 1 ou 2, **caractérisée en ce que** la partie centrale (75) et les parties latérales (77) présentent des dispositifs de tonte et d'amenée (48, 50, 52, 54) ou des dispositifs de cueillette pour la récolte de plantes à tiges.
